# EUROPÄISCHE PATENTANMELDUNG

(11) **EP 1 862 249 A1**
(43) Veröffentlichungstag der Anmeldung: **05.12.2007**
(21) Anmeldenummer: 07008732.5
(22) Anmeldetag: 28.04.2007
(51) Int. Cl.: B23K 11/31

(54) **Einkopf-Mehr-Elektroden-Widerstandsschweissen**

(30) Priorität: 03.06.2006 DE 102006026111
(71) Anmelder: Hirschmann Automotive GmbH, 6830 Rankweil-Brederis (AT)
(72) Erfinder: Lang, Egon, 6832 Röthis (AT); Dablander, Michael, Prof., 6600 Wängle (AT)
(74) Vertreter: Dietrich, Barbara

(57) **Zusammenfassung**

Die Erfindung betrifft ein Verfahren und eine entsprechende Schweißvorrichtung zum Widerstandsschweißen mit einem Schweißkopf (6) an dem zumindest eine SchweißElektrode angeordnet ist, wobei erfindungsgemäß vorgesehen ist, dass zumindest zwei Elektroden (4, 5) mit unterschiedlichen Elektrodeneigenschaften in einem Elektrodenhalter (7) angeordnet sind, der am Schweißkopf (6) schnellwechselbar befestigt ist.

## Beschreibung

Die Erfindung betrifft eine Schweißvorrichtung zum Widerstandsschweißen nach dem Oberbegriff des Patentanspruchs 1 und ein Verfahren zum Widerstandsschweißen mit dieser Schweißvorrichtung.

Für die Herstellung der Verbindung der Bauteile von mechatronischen Produkten wird Widerstandsschweißen häufig als Verbindungsverfahren eingesetzt.

Das Widerstandsschweißen beruht auf Joulescher Widerstandserwärmung beim Stromfluss durch die zu fügenden Werkstücke. Beim Widerstandsschweißen werden keine abschmelzende Elektrode und kein Lichtbogen benötigt. Die Metallverbindung erfolgt durch Erwärmen der Berührungsfläche der Werkstücke mit Hilfe des elektrischen Stroms (Ohmscher Widerstand der zu verbindenden Teile) und durch anschließendes Zusammendrücken. Zum Widerstandsschweißen werden eine hohe Stromstärke und eine niedrige Spannung benötigt. Diese Schweißverbindung liefert eine hohe Güte.

Strom und Kraft werden durch Schweißelektroden übertragen. Die Werkstücke werden an den Stoßflächen nach ausreichendem Erwärmen unter Druck geschweißt. Es kann ein Punkt oder mehrere gleichzeitig geschweißt werden (Einpunktschweißen, Mehrpunktschweißen). Je nach der Stromzufuhr unterscheidet man:
- Einseitiges Punktschweißen, wenn der Strom durch nebeneinander stehende Elektroden von einer Werkstückseite zugeführt wird.
- Zweiseitiges Punktschweißen, wenn der Strom durch sich unmittelbar gegenüberstehende Elektroden von beiden Werkstückseiten zugeführt wird.

Aufgrund der unterschiedlichen Bauteilegeometrien und Werkstoffe der Schweißpartner ist der Einsatz von verschiedenen Schweißelektroden erforderlich.

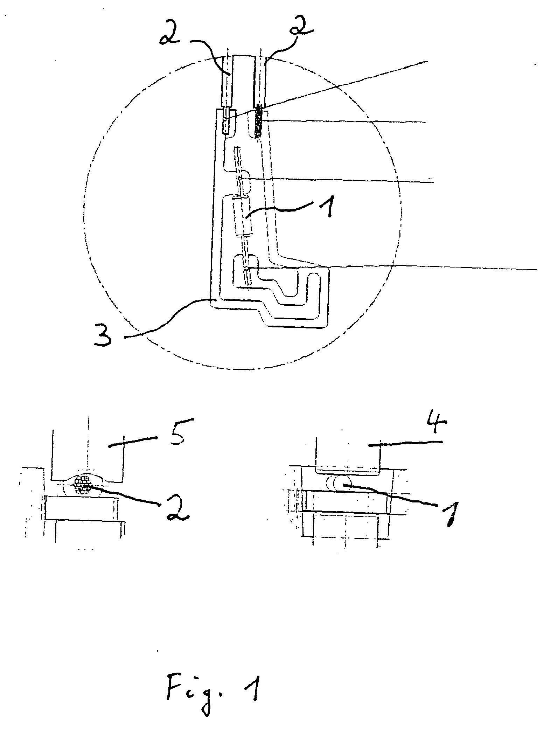

In Figur 1 ist exemplarisch die Schweißaufgabe an einer mechatronischen Baugruppe dargestellt. Im Beispiel sollen ein Widerstand 1 und Litzen 2 auf einen Grundkörper 3, ein Stanzteil, geschweißt werden. Der gezeigte Widerstand 1 ist erfolgreich nur mit der Elektrode 4 und die Litzen 2 nur mit der Elektrode 5 zu schweißen.

Werden für eine Widerstandsschweißaufgabe zwei oder mehrere Elektroden benötigt, ist es üblich, für jede Elektrode einen eigenen Schweißkopf mit eigenem Elektrodenhalter zu verwenden. Die Anzahl der Elektroden ergibt sich aus
- der für die relevanten Einsatzbedingungen der Schweißaufgabe gewählten Elektrodenwerkstoffe und
- der gewählten Form, Befestigung und Kühlung der Elektroden.

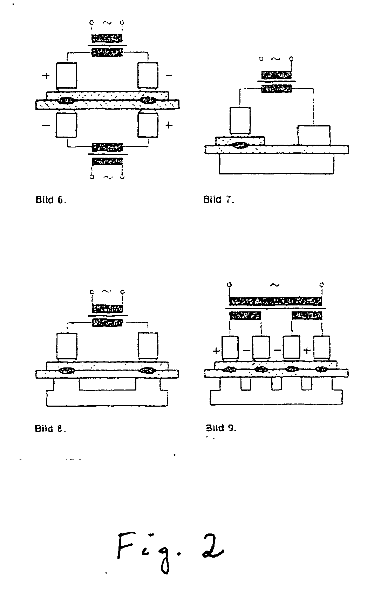

Eine Ausnahme davon bildet das Mehrpunktschweißen, dabei werden mit zwei oder mehr Elektroden nacheinander oder gleichzeitig mehrere Schweißpunkte in einer Schweißspielzeit erzeugt. Zum Beispiel werden beim einseitigen Doppelpunktschweißen in einer Schweißspielzeit zwei einzelne Schweißpunkte hergestellt. Hierbei durchfließt der gleiche Strom zwei Elektroden (siehe Bild 8 - Figur 2) innerhalb eines einzigen Stromkreises (Serienschaltung). Beim Vielpunktschweißen werden in einem Schweißzyklus zwei oder mehr Schweißpunkte erzeugt, Bilder 6, 8, 9- Figur 2. Polarität und Phasenlagen sind bei Bild 6 und Bild 9 zu beachten.

Der Erfindung liegt die Aufgabe zugrunde, eine Schweißvorrichtung zum Widerstandsschweißen so weiterzubilden, dass mit ihr auch zwei oder mehr Schweißstellen, bei denen unterschiedliche Elektroden erforderlich sind, kostengünstig herzustellen sind. Weiterhin soll ein Verfahren zum Widerstandsschweißen mit dieser Schweißvorrichtung angegeben werden.

Diese Aufgabe wird bezüglich der Schweißvorrichtung durch die Merkmale des Patentanspruchs 1 gelöst.

Erfindungsgemäß ist vorgesehen, dass zumindest zwei Elektroden mit unterschiedlichen Elektrodeneigenschaften in einem Elektrodenhalter angeordnet sind, der am Schweißkopf schnellwechselbar befestigt ist. So können mit nur einem Schweißkopf Schweißstellen, bei denen unterschiedliche Elektroden erforderlich sind, kostengünstig hergestellt werden. Durch das schnelle Auswechseln des Elektrodenhalters werden Stillstandszeiten reduziert.

Bevorzugt ist der Elektrodenhalter mit einer einzigen Schraubverbindung am Schweißkopf befestigt und lässt sich so schnell und einfach auswechseln.

Die Vorteile des schnellwechselbaren Elektrodenhalters bestehen auch darin, dass der Elektrodenhalter durch Lösen der Schraube demontiert und außerhalb der Schweißvorrichtung mit neuen Elektroden bestückt werden kann, was wiederum eine Reduktion der Stillstandszeiten der Maschine bewirkt.

Entweder sind die Elektroden für den Minuspol und/oder die Elektroden für den Pluspol in einem eigenen schnellwechselbaren Elektrodenhalter angeordnet.

Die unterschiedlichen Elektrodeneigenschaften umfassen die Geometrien der Elektrodenspitzen, die Länge der Elektroden, die Elektrodenwerkstoffe und die Kühlung der Elektroden.

Bezüglich des Verfahrens wird die genannte Aufgabe dadurch gelöst, dass für jede Schweißbedingung eine Elektrode im Elektrodenhalter angeordnet wird und dass für jede Schweißung die geeignete Elektrode durch eine vertikale oder horizontale Bewegung des Schweißkopfes bzw. des Elektrodenhalters an die geforderte Schweißstelle verfahren wird.

Bevorzugt wird durch unterschiedliche Längen der Elektroden im Elektrodenhalter und/oder Drehung des Schweißkopfes bzw. des Elektrodenhalters eine Störung des Schweißvorganges durch die nicht im Einsatz befindliche Elektrode vermieden.

Die Erfindung kann beidseitig, d.h. für den Plus- und Minus-Pol verwendet werden. Eine Abgrenzung zum Mehrpunkt-, Doppel- und Vielpunktschweißen besteht darin, dass die verschiedenen Schweißstellen entsprechend der relevanten Einsatzbedingungen und E-lektrodenausführungen verschieden parametriert (Schweißparameter, Elektroden usw.) werden können.

Vorteile:
- Reduktion der Stillstandszeiten aufgrund von Elektrodenwechseln
- Der Einsatz unterschiedlicher Elektrodengeometrien entsprechend der vorliegenden Einsatzbedingungen ist möglich.
- Geringere Investitionskosten aufgrund des Wegfalls eines bzw. mehrerer Schweißköpfe
- Geringere Investitionskosten aufgrund der geringen Anzahl von Arbeitsstationen an Maschinen
- Einsatz von bewährten Verfahren und Komponenten zur Durchfüh- rung der Schweißaufgabe und Prozessüberwachung ist möglich

Vorteile gegenüber Doppel- und Vielpunktschweißen:
Eine Prozessüberwachung ist entsprechend einem zweiseitigen Einpunktschweißens auszuführen. Die Aussichten Prozesskontrolleinrichtungen in der Fertigung einsetzen zu können, sind beim Einzelpunktschweißen am größten, beim Vielbuckelschweißen sind sie als aussichtslos abzuschätzen.

Die Erfindung kann überall dort eingesetzt werden, wo zwei oder mehr Schweißstellen unter unterschiedlichen Einsatzbedingungen und mit unterschiedlichen gewählten Formen, Befestigung und Kühlung der Elektroden ausgeführt werden sollen.

Beim erfindungsgemäßen Einkopf- Mehr- Elektroden- Widerstandsschweißen wird demnach eine nicht eingegrenzte Zahl von Elektroden unterschiedlicher Länge in einen schnellwechselbaren Elektrodenhalter für zwei oder mehr Elektroden eingesetzt.

Weitere vorteilhafte Ausgestaltungen der Erfindung sind der Figurenbeschreibung zu entnehmen.

Die Figuren 1 und 2 wurden schon in der Beschreibungseinleitung beschrieben.

Figur 3 zeigt einen Ausschnitt aus einer Schweißvorrichtung. Mit dem Bezugszeichen 9 ist eine Aufnahme für einen Elektrodenhalter 7 an einem Schweißkopf 6 bezeichnet. Der Elektrodenhalter 7 ist so ausgebildet, dass er schnell gegen einen anderen Elektrodenhalter ausgewechselt werden kann.

Damit dies möglich ist, wird der Elektrodenhalter 7, in dem hier gezeigten Beispiel, nur über eine einzige Schraubverbindung 8 am Schweißkopf befestigt. Es ist jede Verbindungsart denkbar, bei der der Elektrodenhalter 7 sowohl fest am Schweißkopf 6, oder hier an der Aufnahme 9, befestigt oder verankert ist als auch leicht auswechselbar ist.

Die Vorteile des schnellwechselbaren Elektrodenhalters 7 bestehen auch darin, dass der Elektrodenhalter 7 durch Lösen der Schraubverbindung 8 demontiert und außerhalb der Schweißvorrichtung mit neuen Elektroden bestückt werden kann, was wiederum eine Reduktion der Stillstandszeiten der Maschine bewirkt.

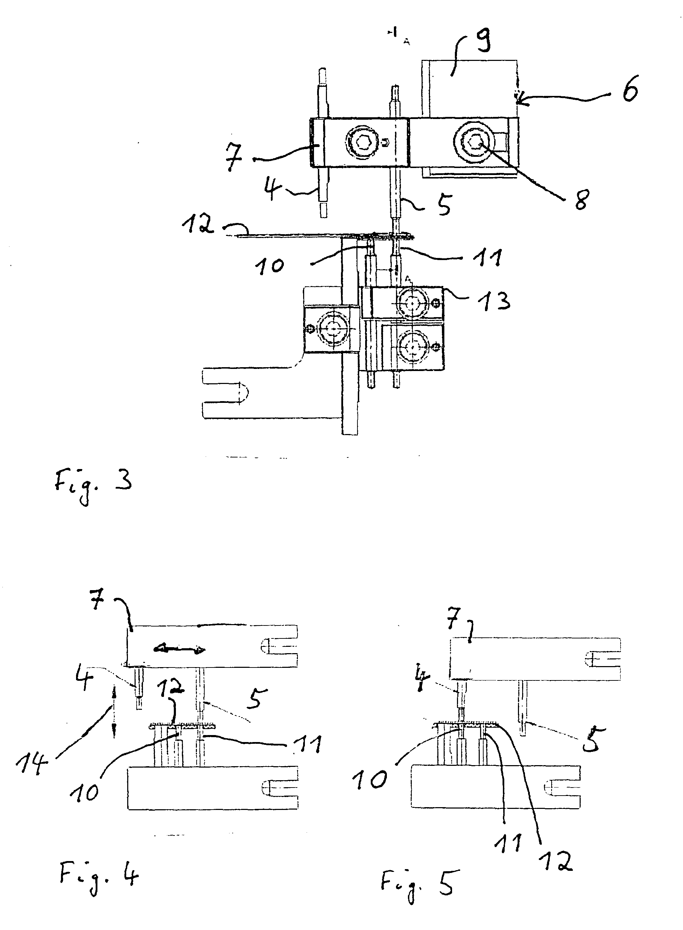

In Figur 3 ist beispielhaft ein Elektrodenhalter 7 mit zwei Elektroden 4, 5 mit voneinander verschiedenen Elektrodeneigenschaften gezeigt.

Wie in Figur 3 gezeigt, ist gerade die Elektrode 5 im Einsatz, während die Elektrode 4 sich in einem Freiraum befindet, in dem kein Kontakt zum Schweißmedium oder anderen Bauteilen besteht. Aus diesem Grund weisen die beiden Elektroden 4, 5 auch eine unterschiedliche Länge auf, wodurch sie sich nicht so leicht gegenseitig stören.

Die Elektroden 10, 11 mit der entgegengesetzten Polung wie die Elektroden 4, 5 sind unterhalb des zu verschweißenden Teils, hier ein Stanzteil 12, angeordnet und sind ebenfalls in einem schnellwechselbaren Elektrodenhalter 13 angebracht.

Die Durchführung der einzelnen Schweißaufgaben erfolgt durch das Verschieben der Elektroden 4, 5 in x-, y- und z- Achse.

Das Funktionsprinzip des erfindungsgemäßen Einkopf- Mehrelektroden-Schweißkopfes ist in den Figuren 4 und 5 dargestellt.

Das Funktionsprinzip gestaltet sich wie nachfolgend dargestellt:
1. Schweißung des Schweißpartners 1 (z.B. der Widerstand 1 in Figur 1) an den Schweißpartner 3 mit der Elektrode 5.
2. Verfahren des Schweißkopfs bzw. des Elektrodenhalters 7 und damit der Elektroden in vertikaler und horizontaler Richtung. Mit dem Bezugszeichen 14 ist der Schweißhub bezeichnet.
3. Schweißung des Schweißpartners 3 (z.B. Litze 2 in Figur 1) an Schweißpartner 2 mit der Elektrode 4.
4. Verfahren des Schweißkopfes 6 bzw. des Elektrodenhalters 7 in die Grundposition.

### Bezugszeichenliste:

- 1.: Widerstand
- 2.: Litzen
- 3.: Grundkörper
- 4.: Elektrode
- 5.: Elektrode
- 6.: Schweißkopf
- 7.: Elektrodenhalter
- 8.: Schraubverbindung
- 9.: Aufnahme
- 10.: Elektrode
- 11.: Elektrode
- 12.: Stanzteil
- 13.: Elektrodenhalter
- 14.: Schweißhub

## Patentansprüche

1. Schweißvorrichtung zum Widerstandsschweißen mit einem Schweißkopf (6) an dem zumindest eine Schweiß-Elektrode angeordnet ist, **dadurch gekennzeichnet, dass** zumindest zwei Elektroden (4, 5) mit unterschiedlichen Elektrodeneigenschaften in einem Elektrodenhalter (7) angeordnet sind, der am Schweißkopf (6) schnellwechselbar befestigt ist.

2. Schweißvorrichtung nach Anspruch 1, **dadurch gekennzeichnet, dass** der Elektrodenhalter (7) mit einer einzigen Schraubverbindung (8) am Schweißkopf (6) befestigt ist.

3. Schweißvorrichtung nach Anspruch 1 oder 2, **dadurch gekennzeichnet, dass** entweder die Elektroden (4, 5) für den Minuspol und/oder die Elektroden für den Pluspol in einem eigenen schnellwechselbaren Elektrodenhalter (7) angeordnet sind.

4. Schweißvorrichtung nach einem der Ansprüche 1 bis 4, **dadurch gekennzeichnet, dass** die unterschiedlichen Elektrodeneigenschaften die Geometrien der Elektrodenspitzen, die Länge der Elektroden, die Elektrodenwerkstoffe und die Kühlung der Elektroden umfassen.

5. Verfahren zum Widerstandsschweißen von zwei oder mehr Schweißstellen unterschiedlicher Schweißbedingungen mit einer Schweißvorrichtung nach einem der Ansprüche 1 bis 4, **dadurch gekennzeichnet, dass** für jede Schweißbedingung eine Elektrode (4, 5) im Elektrodenhalter (7) angeordnet wird und dass für jede Schweißung die geeignete Elektrode (4, 5) durch eine vertikale oder horizontale Bewegung des Schweißkopfes (6) bzw. des Elektrodenhalters (7) an die geforderte Schweißstelle verfahren wird.

6. Verfahren nach Anspruch 5, **dadurch gekennzeichnet, dass** durch unterschiedliche Längen der Elektroden (4, 5) im Elektrodenhalter (7) und/oder Drehung des Schweißkopfes (6) bzw. des Elektrodenhalters (7) eine Störung des Schweißvorganges durch die nicht im Einsatz befindliche Elektrode vermieden wird.
